# EUROPEAN PATENT APPLICATION

(11) **EP 4 749 076 A1**
(43) Date of publication of application: **27.05.2026**
(21) Application number: 24843461.5
(22) Date of filing: 15.07.2024
(51) Int. Cl.: E06B 9/28, E06B 9/386, H02S 20/30, H02S 40/30, E06B 9/24

(54) **SOLAR POWER GENERATION BLIND DEVICE**

(30) Priority: 19.07.2023 KR 20230094083
(71) Applicant: Happy Motive Co., Ltd, Seoul 08588 (KR)
(72) Inventor: PARK, Dongki, Seoul 08715 (KR)
(74) Representative: Jung, Minkyu
(86) International application number: PCT/KR2024/010108
(87) International publication number: WO 2025/018745

(57) **Abstract**

The present invention relates to a solar power generation blind device and, more specifically, to a solar power generation blind device in which the electrical connection between blind slats is simplified so that each of the blind slats can easily move without interference.

## Description

### [Technical Field]

The present invention relates to a solar power generation blind device, and more specifically, to a solar power generation blind device in which each blind slat may be easily moved without interference by simplifying an electrical connection between blind slats.

### [Background Art]

Solar power generation is a technology which converts solar energy into electrical energy without the help of a generator, and is attracting attention as an environmentally friendly alternative energy source.

A solar power generation device is usually installed outdoors, but there is a problem when the solar power generation device is installed outdoors. This is a case in which solar panels are contaminated as dust, foreign substances, and the like settle and attach to the solar panels. The issue of contamination of the solar panels causes a problem that the efficiency of the solar power generation is significantly reduced.

In response to the above-described problem, several methods for installing solar panels indoors have been recently explored. One of the methods is a method of installing solar panels on a blind installed on a window.

Korean Patent Publication No. 10-2018-0131749 discloses a blind wing assembly for solar power generation. The blind wing assembly for solar power generation according to the publication has an advantage of allowing individual replacement of solar cells by configuring the solar cells in an assembled manner.

However, since the blind wing assembly for solar power generation according to the publication is in a form in which a wire portion is simply fixed by a connecting connector, there is a problem that the wire portion may be twisted or broken when a plurality of blind wing assemblies are brought into close contact with each other, spaced apart from each other, or rotated.

Related Art Document: (Patent Document 0001) Korean Patent Publication No. 10-2018-0131749

### [Disclosure]

### [Technical Problem]

The purpose of the present invention is to solve the above-described conventional problems, and to provide a solar power generation blind device in which each blind slat may be easily moved without interference by simplifying the electrical connection between the blind slats.

### [Technical Solution]

According to the present invention, the above object is achieved by a solar power generation blind device including: a plurality of slat portions provided to produce electrical energy by generating electricity using light; connecting portions that electrically connect the plurality of slat portions to each other at end portions of the plurality of slat portions; and a controller that is electrically connected to the connecting portions and collects the electric energy produced by the plurality of slat portions.

Further, the connecting portion may transfer the electrical energy produced by the plurality of slat portions to the controller, and each of the plurality of slat portions may rotate based on the connecting portion installed at the end portion.

In addition, the connecting portion may include a finishing portion that finishes one end portion of the slat portion and is electrically connected to the slat portion, a shaft portion installed in the finishing portion and electrically connected to the finishing portion, a rotating portion that is rotatably installed on the shaft portion and rotates based on the shaft portion, and a wire portion installed in the rotating portion and electrically connected to the shaft portion, and the slat portion may rotate as the finishing portion rotates based on the shaft portion.

In addition, the connecting portion may include a finishing portion that finishes one end portion of the slat portion and is electrically connected to the slat portion, a shaft portion installed in the finishing portion and electrically connected to the finishing portion, a contact portion installed on the shaft portion and electrically connected to the shaft portion, and a rail portion into which the contact portion is inserted in a sliding manner and that is electrically connected to the contact portion, and the slat portion may rotate as the finishing portion rotates based on the shaft portion.

In addition, a blocking portion that blocks light from entering from the outside may be provided between a pair of different rail portions.

In addition, the slat portion may include a substrate portion and a plurality of solar modules that are installed to be electrically connected to the substrate portion and produces the electrical energy by generating electricity using light, the solar modules may include first solar modules respectively installed at one end portion and the other end portion of the substrate portion and a second solar module installed between the pair of first solar modules, a protrusion electrically connected to an electrode of the substrate portion may be formed at one end portion of the first solar module, and protrusions electrically connected to electrodes of the substrate portion may be formed at both end portions of the second solar module.

### [Description of Drawings]

FIG. 1 shows a solar power generation blind device according to a first embodiment of the present invention as a whole.
FIG. 2 is a front view showing the solar power generation blind device according to the first embodiment of the present invention.
FIG. 3 is a side view showing the solar power generation blind device according to the first embodiment of the present invention.
FIG. 4 shows an electrical connection between configurations of the solar power generation blind device according to the first embodiment of the present invention.
FIG. 5 is an enlarged view showing a connection structure of a slat portion and a connecting portion of the solar power generation blind device according to the first embodiment of the present invention.
FIG. 6 is an exploded perspective view of the slat portion and the connecting portion of the solar power generation blind device according to the first embodiment of the present invention.
FIG. 7 shows a solar power generation blind device according to a second embodiment of the present invention as a whole.
FIG. 8 is a front view showing the solar power generation blind device according to the second embodiment of the present invention.
FIG. 9 is a side view showing the solar power generation blind device according to the second embodiment of the present invention.
FIG. 10 shows an electrical connection between configurations of the solar power generation blind device according to the second embodiment of the present invention.
FIG. 11 is an enlarged view showing a connection structure of a slat portion and a connecting portion of the solar power generation blind device according to the second embodiment of the present invention.
FIG. 12 is an exploded perspective view of the slat portion and the connecting portion of the solar power generation blind device according to the second embodiment of the present invention.
FIG. 13 is a front view showing that a blocking portion is provided in the solar power generation blind device according to the second embodiment of the present invention.
FIG. 14 is a top view showing that the blocking portion is provided in the solar power generation blind device according to the second embodiment of the present invention.
FIG. 15 shows that solar modules of the solar power generation blind device according to the first or second embodiment of the present invention are installed on a substrate portion in a sliding manner.
FIG. 16 shows the substrate portion and the solar modules of the solar power generation blind device according to the first or second embodiment of the present invention.
FIG. 17 shows that the solar modules of the solar power generation blind device according to the first or second embodiment of the present invention are installed to be electrically connected to the substrate portion.

### [Modes of the Invention]

Hereinafter, some embodiments of the present invention will be described in detail through exemplary drawings. When assigning reference numerals to components of each of the drawings, it should be noted that identical components are denoted by the same reference numerals as much as possible even when they are shown on different drawings.

In addition, when describing embodiments of the present invention, when a detailed description of a related known configuration or function is determined to hinder understanding of the embodiment of the present invention, the detailed description is omitted.

In addition, when describing components of embodiments of the present invention, terms such as first, second, A, B, (a), (b), and the like may be used. These terms are only intended to distinguish the components from other components, and the nature, order, or sequence of the components are not limited by the terms.

Hereinafter, a solar power generation blind device 100 according to a first embodiment of the present invention will be described in detail with reference to the attached drawings.

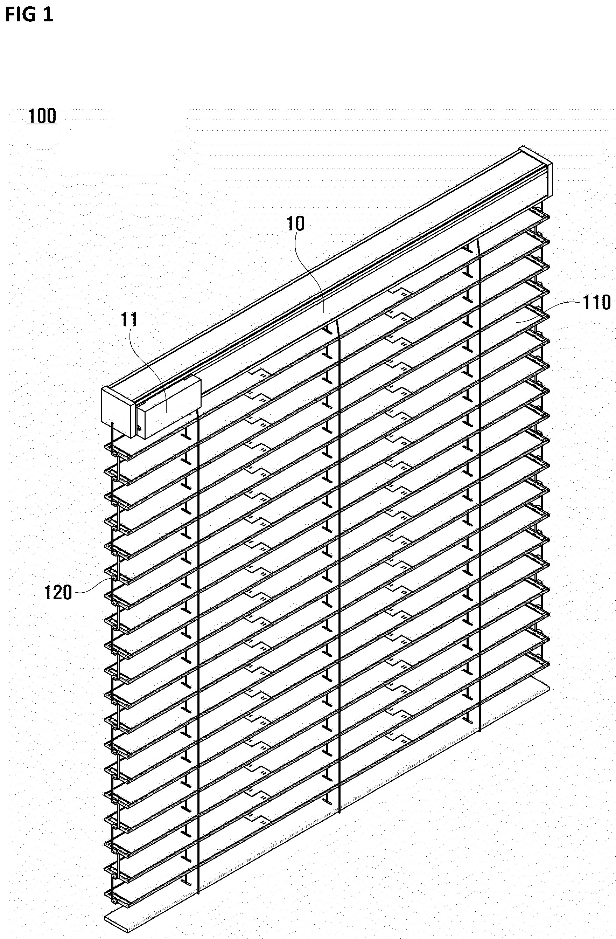

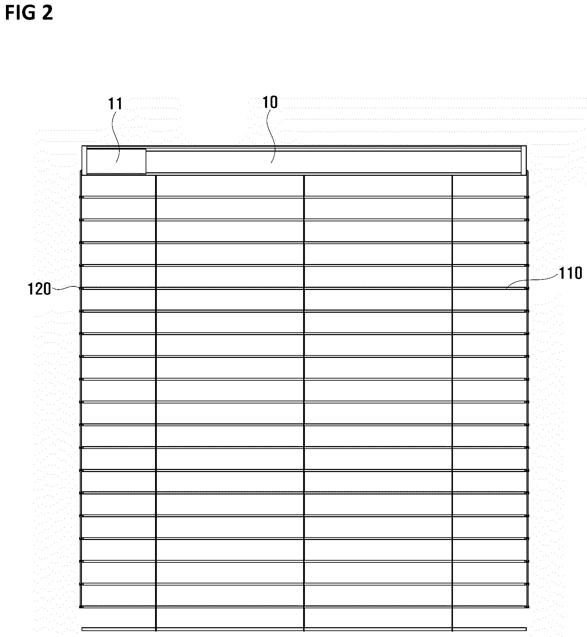

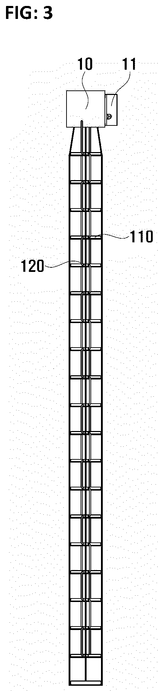

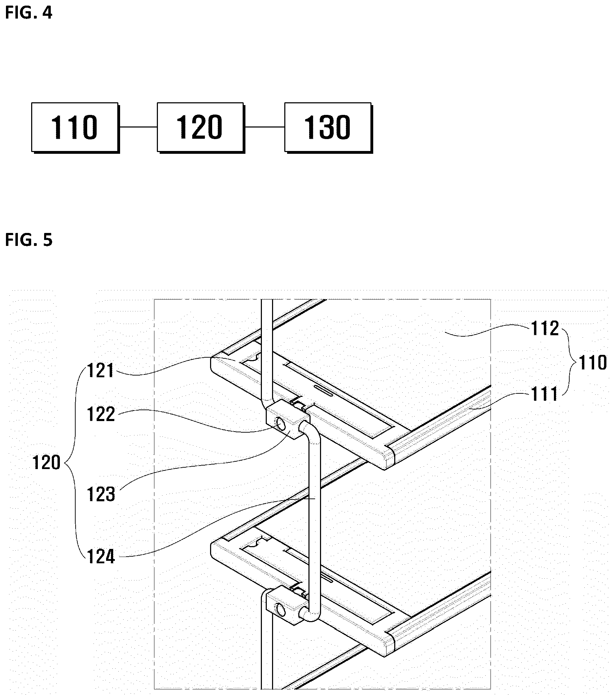

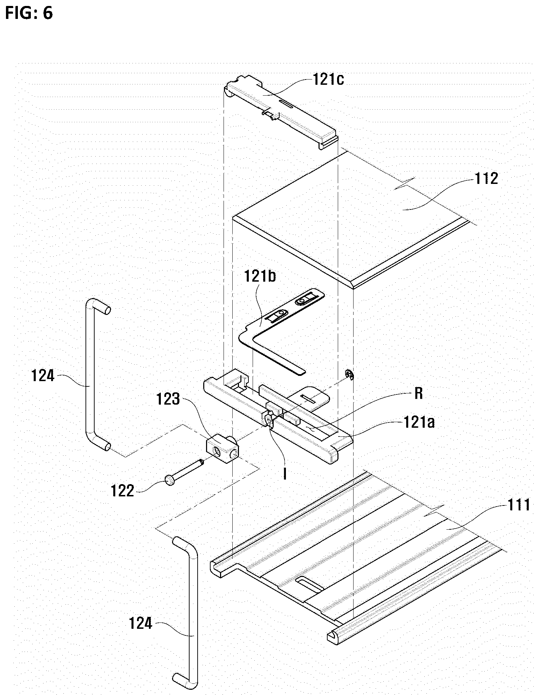

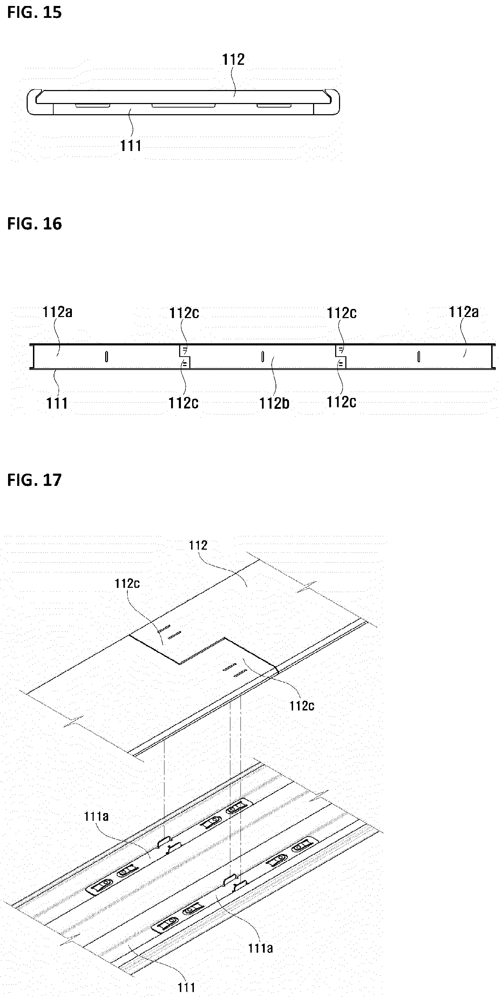

FIG. 1 shows the solar power generation blind device according to the first embodiment of the present invention as a whole, FIG. 2 is a front view showing the solar power generation blind device according to the first embodiment of the present invention, FIG. 3 is a side view showing the solar power generation blind device according to the first embodiment of the present invention, FIG. 4 shows an electrical connection between configurations of the solar power generation blind device according to the first embodiment of the present invention, FIG. 5 is an enlarged view showing a connection structure of a slat portion and a connecting portion of the solar power generation blind device according to the first embodiment of the present invention, FIG. 6 is an exploded perspective view of the slat portion and the connecting portion of the solar power generation blind device according to the first embodiment of the present invention, FIG. 15 shows that solar modules of the solar power generation blind device according to the first or second embodiment of the present invention are installed on a substrate portion in a sliding manner, FIG. 16 shows the substrate portion and the solar modules of the solar power generation blind device according to the first or second embodiment of the present invention, and FIG. 17 shows that the solar modules of the solar power generation blind device according to the first or second embodiment of the present invention are installed to be electrically connected to the substrate portion.

As shown in FIGS. 1 to 4, the solar power generation blind device 100 according to the first embodiment of the present invention electrically connects a plurality of slat portions 110 to each other in a wire manner, and includes the slat portions 110, connecting portions 120, and a controller 130.

The slat portions 110 produce electrical energy by generating electricity using light such as a fluorescent lamp installed indoors, solar light, or the like, and the plurality of slat portions 110 are provided to be disposed in parallel and are electrically connected to each other by the connecting portions 120 described below.

As shown in FIGS. 15 to 17, more specifically, the slat portion 110 includes a substrate portion 111 and solar modules 112.

The substrate portion 111 is formed with a conductor circuit on a surface of an insulating substrate or in the insulating substrate to electrically connect to various modules based on a circuit design, and may be provided as a printed circuit board (PCB).

As shown in FIG. 15, in the above-described substrate portion 111, a sliding space is formed so that the solar modules 112 described below may be inserted and installed in a sliding manner, and a plurality of electrodes 111a are formed on an upper surface of the substrate portion 111 to be electrically connected to a plurality of installed solar modules 112.

According to the substrate portion 111 formed with the above-described sliding space, since the substrate portion 111 and the solar modules 112 may be very easily separated and coupled, the ease of assembly of a blind and the maintenance of the substrate portion 111 may be significantly enhanced.

The solar modules 112 produce electrical energy by generating electricity using light, such as a fluorescent lamp installed indoors, solar light, or the like, and may have a form in which solar cells are connected and coupled in a longitudinal direction and a transverse direction. A plurality of solar modules 112 may be provided to be inserted and sequentially installed on the substrate portion 111 in a sliding manner.

As described above, the solar modules 112 are installed on the substrate portion 111 in which an internal circuit is electrically configured, and thus, there is an advantage in that a separate configuration for electrical connection between the solar modules 112 is not required.

Meanwhile, the plurality of solar modules 112 or the plurality of solar cells in the solar module 112 may be electrically connected to each other in a series connection manner, a parallel connection manner, or a series-parallel combination connection manner. For example, in the series connection manner, both the plurality of solar modules 112 and the plurality of solar cells in the solar modules 112 may be connected in series. Furthermore, in the case series-parallel combination connection manner, the plurality of solar cells in the solar modules 112 may be connected in series and the plurality of solar modules 112 may be connected in parallel, and in this case, when one of the solar modules 112 is shaded, since the remaining solar modules 112 are connected in parallel, a voltage drop occurs only in the shaded solar module 112 and does not occur in the remaining solar modules 112 and thus there is an advantage in that power generation efficiency may be maintained as is when viewed as a whole.

Meanwhile, as shown in FIG. 16, more specifically, the solar module 112 includes first solar modules 112a and a second solar module 112b.

The first solar module 112a is installed on one end portion and/or the other end portion of the substrate portion 111, and a protrusion 112c electrically connected to the electrode 111a formed on an upper surface of the substrate portion 111 is formed on one end portion of the first solar module 112a.

The second solar module 112b is installed on the substrate portion 111 between a pair of first solar modules 112a, and protrusions 112c electrically connected to the electrodes 111a formed on the upper surface of the substrate portion 111 are respectively formed at both end portions of the second solar module 112b.

More specifically, the solar modules 112 of the present invention may be modularized into a preset size, and when the solar modules 112 are installed on the substrate portion 111, only a pair of first solar modules 112a may be installed on the substrate portion 111, a pair of first solar modules 112a and one second solar module 112b may be installed on the substrate portion 111, or a pair of first solar modules 112a and a plurality of second solar modules 112b may installed on the substrate portion 111 depending on a length of the substrate portion 111. For example, each of the first solar module 112a and the second solar module 112b may be modularized into a 12 V standard and a 300 mm size, and accordingly, there is an effect in that the solar module 112 can be applied regardless of the length of the substrate portion 111.

In this case, as shown in FIG. 17, the protrusions 112c of the pair of first solar modules 112a, or the protrusions 112c of the first solar modules 112a and the protrusions 112c of the second solar module 112b may be installed on the substrate portion 111 in an alternating form and the electrodes 111a formed on the upper surface of the substrate portion 111 may each have a portion protruding upward, and each protrusion 112c may be fitted to the protruding portion of the electrode 111a to allow the solar modules 112 to be easily inserted into the substrate portion 111 in a sliding manner and then electrically connected to the substrate portion 111.

Meanwhile, although not shown in the drawing, the slat portion 110 including the above-described substrate portion 111 and solar modules 112 may also be disposed in the form of a vertical blind, rather than a horizontal blind.

The connecting portion 120 is electrically connected to the controller 130 described below while electrically connecting the plurality of slat portions 110 to each other at end portions of the plurality of slat portions 110, and transfers the electrical energy produced by the solar modules 112 to the controller 130 and allows the controller 130 to control and monitor the solar modules 112. Further, the connecting portion 120 may easily rotate the plurality of slat portions 110.

As shown in FIGS. 5 and 6, more specifically, the connecting portion 120 includes a finishing portion 121, a shaft portion 122, a rotating portion 123, and a wire portion 124.

The finishing portion 121 finishes one end portion or the other end portion of the slat portion 110 and is electrically connected to the slat portion 110, and is inserted into and installed in a sliding space of the substrate portion 111 in a sliding manner like the solar module 112 and thus finishes one end portion or the other end portion of the slat portion 110.

More specifically, the finishing portion 121 includes a base module 121a, an expansion electrode 121b, and a fixing module 121c.

The base module 121a is inserted into and installed in the sliding space of the substrate portion 111 in a sliding manner and thus finishes one end portion or the other end portion of the slat portion 110, an insertion hole I into which the shaft portion 122 described below may be inserted and installed is formed in the outer surface, an installation space R which allows the expansion electrode 121b described below to be in electrical contact with the shaft portion 122 while allowing the expansion electrode 121b to be installed therein is formed, and a coupling groove into which the fixing module 121c to be described below may be coupled in a force-fit manner is formed.

The expansion electrode 121b electrically connects the solar module 112, that is, the first solar module 112a, and the shaft portion 122 described below, and is installed in the installation space R of the base module 121a and is in electrical contact with the shaft portion 122.

The fixing module 121c presses and fixes the expansion electrode 121b while the expansion electrode 121b is disposed in the installation space R of the base module 121a, and a coupling protrusion is formed on one side or both sides and is coupled to the coupling groove formed in the base module 121a in a force-fit manner.

The shaft portion 122 is installed in the insertion hole I of the base module 121a and is electrically connected to the expansion electrode 121b, and serves as a rotating shaft when the slat portion 110 on which the rotating portion 123 and finishing portion 121 described below are installed rotates, while being formed of a conductive material to transfer the electrical energy produced by the solar modules 112 to the wire portion 124 described below. That is, the slat portion 110 may rotate as the finishing portion 121 rotates based on the shaft portion 122.

The rotating portion 123 is rotatably installed on the shaft portion 122 and rotates based on the shaft portion 122, a hole into which the shaft portion 122 may be inserted is formed in the front, and holes into which the wire portion 124 described below may be inserted are formed in both side surfaces.

Since the rotating portion 123 may appropriately rotate in each case in which tension is applied to the wire portion 124 and the wire portion 124 is elongated as the plurality of slat portions 110 are spaced apart from each other as a whole (that is, the blinds are unfolded), or the wire portion 124 is folded as the plurality of slat portions 110 are in close contact with each other as a whole (that is, the blinds are folded), according to the above-described rotating portion 123, the wire portion 124 may be effectively prevented from being broken or twisted when folding or unfolding the blinds.

The wire portion 124 is installed in the rotating portion 123 and electrically connected to the shaft portion 122, electrically connects the upper and lower slat portions 110 to each other, and serves to receive the electrical energy produced by the upper and lower slat portions 110 and transfer the electrical energy to the controller 130 described below. The wire portion 124 may be made of a flexible material to respond when tension is applied or released according to the operation of the slat portions 110.

According to the connecting portion 120 including the above-described finishing portion 121, shaft portion 122, rotating portion 123, and wire portion 124, electrical connection between blind slats is simplified and thus each blind slat may easily rotate, and the ease of installation, disassembly and assembly, and maintenance of the blind may be significantly increased.

The controller 130 collects the electrical energy produced by the slat portions 110 and controls the operation of the solar modules 112, and is electrically connected to at least one of the plurality of solar modules 112 through the connecting portion 120.

The controller 130 may be provided with the same shape and area as the solar module 112 and installed on a portion where the uppermost solar module 112 is installed, and may also be installed as a separate module on an upper side of the solar power generation blind device 100.

Further, the controller 130 collects the electrical energy produced by the solar modules 112 and stores the electrical energy in a battery (not shown), and controls the operation of the solar modules 112 or monitors a status of the solar modules 112.

In addition, a support portion 10 which supports the plurality of slat portions 110 is provided on the upper side of the solar power generation blind device 100, and a motor 11 controlled by the controller 130 may be installed on the support portion 10. The motor 11 is wound with a string which connects the plurality of slat portions 110, and when the motor 11 operates under control of the controller 130, as the string is slightly wound or unwound, the posture of the plurality of slat portions 110 changes and thus a shading effect may be finely adjusted, and when the string is continuously wound or unwound, since the plurality of slat portions 110 come into close contact with each other or are spaced apart from each other as a whole, the shading effect can be significantly adjusted.

Further, a communication module may be installed in the controller 130 to be wirelessly connected to an external terminal device such as a smartphone, and a dedicated application capable of monitoring a solar power generation status, controlling the slat portions 110, displaying statistics of recorded information, and the like may be installed in the external terminal device. The dedicated application may access an external network to allow a program update, a firmware update, or the like of the controller 130, and may perform authentication of genuine products or the like by reading the unique serial number of the controller 130. According to the controller 130 and the external terminal device, since monitoring and control of the slat portions 110 are remotely implemented, convenience of a blind user may be significantly enhanced.

Further, the controller 130 may adjust the posture of the slat portions 110 by driving the motor 11 using the results of monitoring an electrical energy production amount of the slat portions 110. This is because the amount of electrical energy produced by the slat portions 110 may vary depending on an angle at which solar light is irradiated onto the slat portions 110, and thus the posture of the slat portions 110 should be adjusted when the amount of produced electrical energy decreases.

Meanwhile, control of the posture of the slat portions 110 of the above-described controller 130 may be performed by adjusting the posture of the remaining slat portions 110 based on the posture of one slat portion 110 having the highest electricity production amount among the plurality of slat portions 110.

Further, the controller 130 may receive information on the solar altitude in the corresponding region depending on time information transferred from a network by accessing the network through the communication module, and the controller 130 may adjust the postures of the slat portions 110 by driving the motor 11 using this information. Meanwhile, the information on the solar altitude in the corresponding region depending on the time information may be information previously input to the controller 130. With this control process of the controller 130, the electrical energy production efficiency of the slat portions 110 may be maximized.

Further, the controller 130 may be provided to monitor a connection status with an external power source and generate a notification (also transmit the notification to an application) when there is no connection. This is because the electrical energy produced by the slat portions 110 may not be used when the controller 130 is not connected to the external power source.

According to the above-described controller 130, when the electrical energy production amount of the slat portions 110 decreases or falls below a certain level, since the motor 11 may be controlled by the controller 130 so that the posture of the slat portions 110 changes to an angle at which electrical energy production is maximized, the electrical energy production efficiency of the slat portions 110 may be maximized.

According to the solar power generation blind device 100 according to the first embodiment of the present invention including the above-described slat portions 110, connecting portions 120, and controller 130, since the electrical connection between the blind slats may be simplified, there is an effect in that each blind slat can easily move without interference, and the ease of installation, disassembly and assembly, and maintenance of the blind can be significantly increased.

Hereinafter, a solar power generation blind device 200 according to a second embodiment of the present invention will be described in detail with reference to the attached drawings.

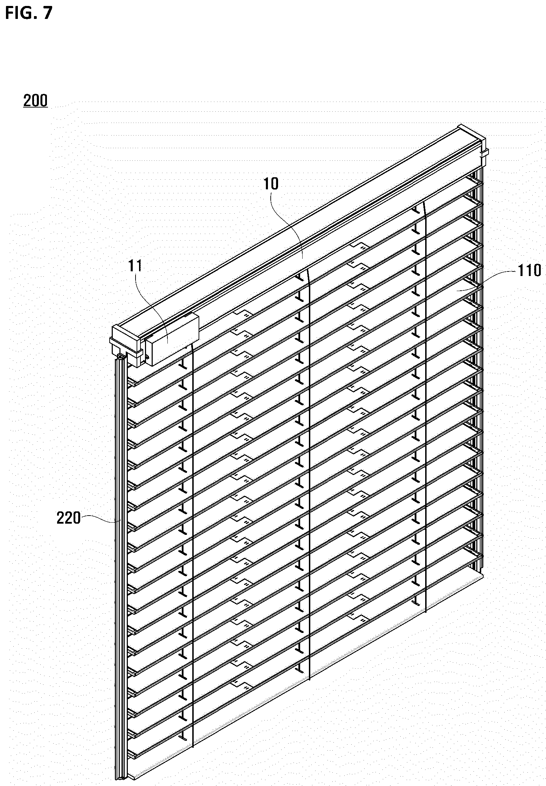

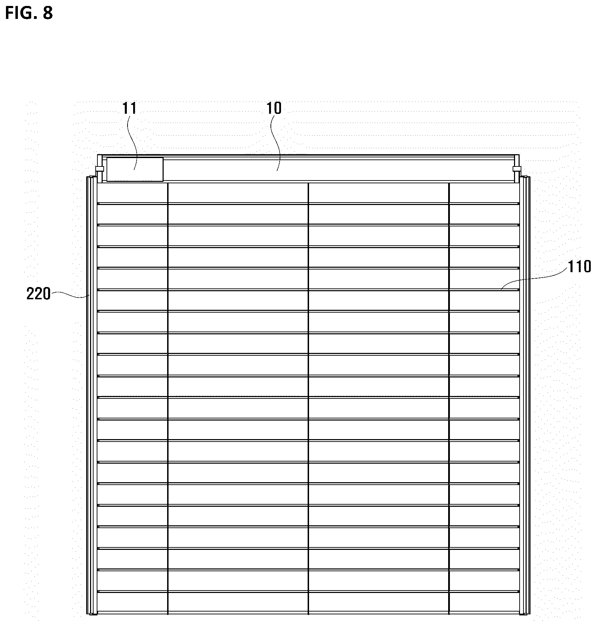

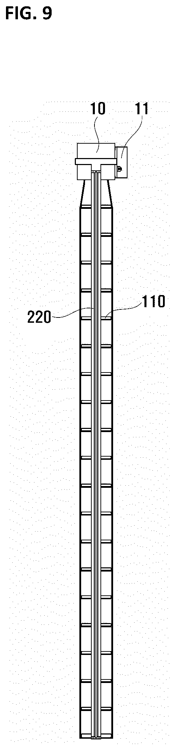

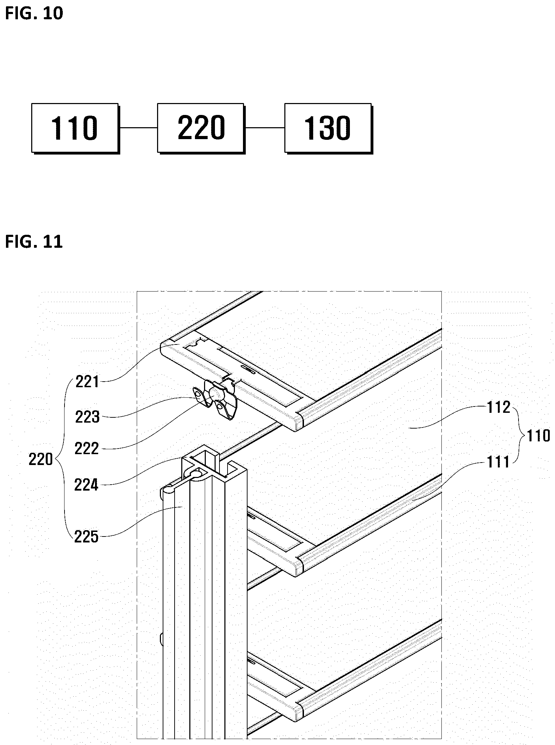

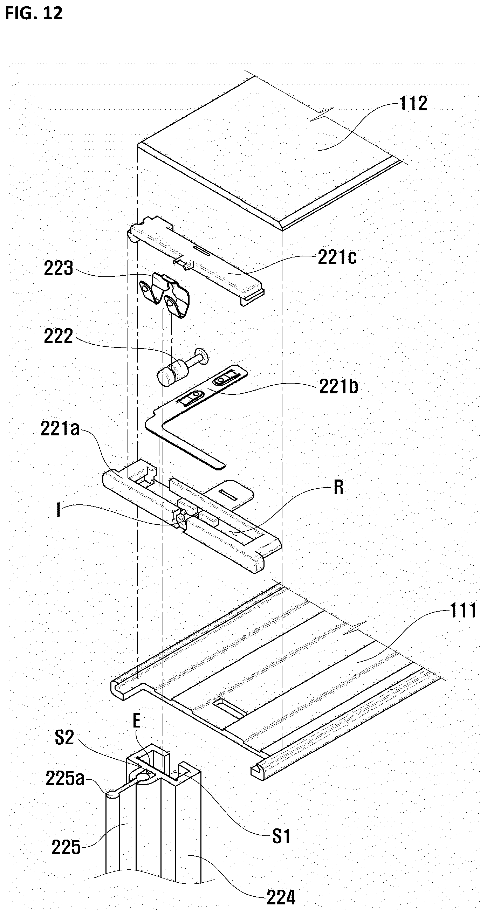

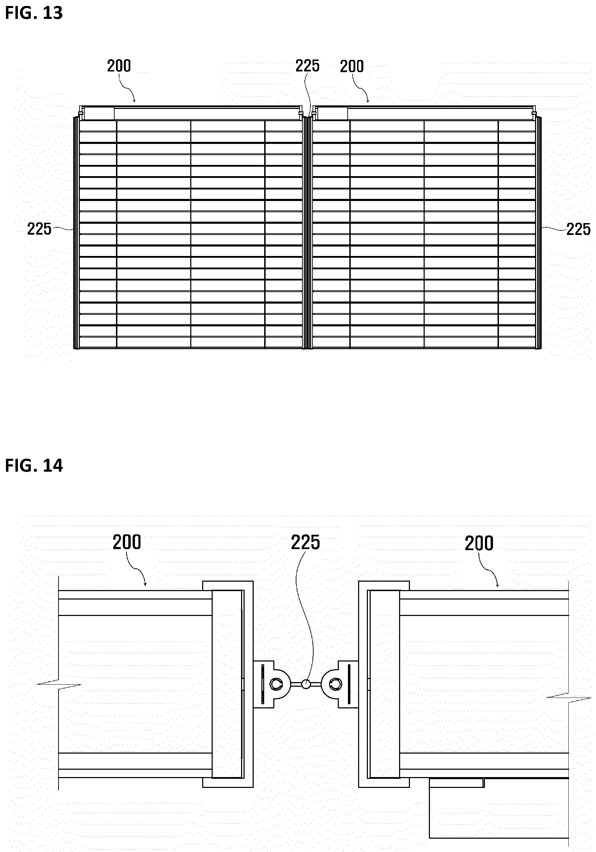

FIG. 7 shows the solar power generation blind device according to the second embodiment of the present invention as a whole, FIG. 8 is a front view showing the solar power generation blind device according to the second embodiment of the present invention, FIG. 9 is a side view showing the solar power generation blind device according to the second embodiment of the present invention, FIG. 10 shows an electrical connection between configurations of the solar power generation blind device according to the second embodiment of the present invention, FIG. 11 is an enlarged view showing a connection structure of a slat portion and a connecting portion of the solar power generation blind device according to the second embodiment of the present invention, FIG. 12 is an exploded perspective view of the slat portion and the connecting portion of the solar power generation blind device according to the second embodiment of the present invention, FIG. 13 is a front view showing that a blocking portion 225 is provided in the solar power generation blind device according to the second embodiment of the present invention, FIG. 14 is a top view showing that the blocking portion 225 is provided in the solar power generation blind device according to the second embodiment of the present invention, FIG. 15 shows that solar modules of the solar power generation blind device according to the first or second embodiment of the present invention are installed on a substrate portion in a sliding manner, FIG. 16 shows the substrate portion and the solar modules of the solar power generation blind device according to the first or second embodiment of the present invention, and FIG. 17 shows that the solar modules of the solar power generation blind device according to the first or second embodiment of the present invention are installed to be electrically connected to the substrate portion.

As shown in FIGS. 7 to 10, the solar power generation blind device 200 according to the second embodiment of the present invention electrically connects a plurality of slat portions 110 to each other in a rail manner, and includes the slat portions 110, connecting portions 220, and a controller 130.

The slat portions 110 produce electrical energy by generating electricity using light such as a fluorescent lamp installed indoors, solar light, or the like, and the plurality of slat portions 110 are provided to be disposed in parallel and are electrically connected to each other by the connecting portions 220 described below.

Since the following contents of the slat portion 110 are the same as those of the solar power generation blind device 100 according to the first embodiment of the present invention described above, overlapping descriptions will be omitted.

The connecting portion 220 is electrically connected to the controller 130 described below while electrically connecting the plurality of slat portions 110 to each other at end portions of the plurality of slat portions 110, and transfers the electrical energy produced by solar modules 112 to the controller 130, and allows the controller 130 to control and monitor the solar modules 112. Further, the connecting portion 220 may easily rotate the plurality of slat portions 110.

As shown in FIGS. 11 and 12, more specifically, the connecting portion 220 includes a finishing portion 221, a shaft portion 222, a contact portion 223, a rail portion 224, and a blocking portion 225.

The finishing portion 221 finishes one end portion or the other end portion of the slat portion 110 and is electrically connected to the slat portion 110, and is inserted and installed in a sliding space of the substrate portion 111 in a sliding manner like the solar module 112 and thus finishes one end portion or the other end portion of the slat portion 110.

More specifically, the finishing portion 221 includes a base module 221a, an expansion electrode 221b, and a fixing module 221c.

The base module 221a is inserted and installed in the sliding space of the substrate portion 111 in a sliding manner and thus finishes one end portion or the other end portion of the slat portion 110, an insertion hole I into which the shaft portion 222 described below may be inserted and installed is formed in the outer surface, an installation space R which allows the expansion electrode 221b described below to be in electrical contact with the shaft portion 222 while allowing the expansion electrode 221b to be installed therein is formed, and a coupling groove into which the fixing module 221c to be described below may be coupled in a force-fit manner is formed.

The expansion electrode 221b electrically connects the solar module 112, that is, a first solar module 112a, and the shaft portion 222 described below, and is installed in the installation space R of the base module 221a and is in electrical contact with the shaft portion 222.

The fixing module 221c presses and fixes the expansion electrode 221b while the expansion electrode 221b is disposed in the installation space R of the base module 221a, and a coupling protrusion is formed on one side or both sides and is coupled to the coupling groove formed in the base module 221a in a force-fit manner.

The shaft portion 222 is installed in the insertion hole I of the base module 221a and is electrically connected to the expansion electrode 221b, and serves as a rotating shaft when the slat portion 110 on which the finishing portion 221 described below is installed rotates while being formed of a conductive material to transfer the electrical energy produced by the solar modules 112 to the contact portion 223 described below. That is, the slat portion 110 may rotate as the finishing portion 221 rotates based on the shaft portion 222.

The contact portion 223 is installed on the shaft portion 222 and is electrically connected to the shaft portion 222, and is inserted into the rail portion 224 described below. The contact portion 223 is formed of a conductive material, a single contact terminal or plurality of contact terminals that are in contact with an internal conductive plate E of the rail portion 224 described below are formed to extend and be bent, and a catch groove caught by the shaft portion 222 so that the contact portion 223 may be in electrical contact with the shaft portion 222 is formed in a center portion of the contact portion 223.

Since the contact portion 223 may appropriately move up and down in the rail portion 224 in each case in which the plurality of slat portions 110 are spaced apart from each other as a whole (that is, the blinds are unfolded), or the plurality of slat portions 110 are in close contact with each other as a whole (that is, the blinds are folded), according to the above-described contact portion 223, since wires are not used, wires may be fundamentally prevented from being broken or twisted, and there is an effect in that the blinds can be easily folded or unfolded.

The rail portion 224 provides a first insertion space S1 on one side so that the contact portion 223 may be inserted in a sliding manner, is electrically connected to the contact portion 223 and thus electrically connects the upper and lower slat portions 110 to each other, and serves to receive the electrical energy produced by the upper and lower slat portions 110 and transfer the electrical energy to the controller 130 described below.

The conductive plate E having conductivity in a longitudinal direction is formed in the first insertion space S1 of the rail portion 224, and as the above-described contact terminals of the contact portion 223 come into contact with the conductive plate E, the contact portion 223 and the rail portion 224 are electrically connected.

Meanwhile, the rail portion 224 provides a second insertion space S2 on the other side so that the blocking portion 225 described below may be inserted in a sliding manner.

The blocking portion 225 blocks external light from entering indoors through the solar power generation blind device of the present invention, and is installed between a pair of different rail portions 224.

As shown in FIGS. 12 to 14, the blocking portion 225 may have a shape in which catches 225a are formed at both end portions, and the blocking portion 225 may be installed by being inserted into the second insertion space S2 of the rail portion 224 in a sliding manner and then not being detached from the second insertion space S2 by the catches 225a, but the present invention is not limited thereto, and any shape may be provided as long as it blocks external light from entering indoors in the solar power generation blind device.

According to the connecting portion 220 including the above-described finishing portion 221, shaft portion 222, contact portion 223, rail portion 224, and blocking portion 225, electrical connection between blind slats is simplified and thus each blind slat may easily rotate, and the ease of installation, disassembly and assembly, and maintenance of the blind may be significantly increased.

The controller 130 collects the electrical energy produced by the slat portions 110 and controls the operation of the solar modules 112, and is electrically connected to at least one of the plurality of solar modules 112 through the connecting portion 220.

Since the following contents of the controller 130 are the same as those of the above-described solar power generation blind device 100 according to the first embodiment of the present invention, overlapping descriptions will be omitted.

According to the solar power generation blind device 200 according to the second embodiment of the present invention including the above-described slat portions 110, connecting portions 220, and controller 130, since the electrical connection between the blind slats may be simplified, there is an effect in that each blind slat can easily move without interference, and the ease of installation, disassembly and assembly, and maintenance of the blind can be significantly increased.

While all of the components constituting the embodiments of the present invention have been described above as being combined or operating in combination, the present invention is not necessarily limited to these embodiments. In other words, any of the components may optionally operate in combination with one or more other components within the scope of the present invention.

In addition, terms such as "includes," "consists of," or "has" as used herein shall, unless specifically stated otherwise, be construed to mean that the component may be inherent in, and therefore may further include other components, rather than exclude, other components. All terms, including technical or scientific terms, unless otherwise defined, shall have the same meaning as commonly understood by one of ordinary skill in the art to which this invention belongs. Commonly used terms, such as terms defined in dictionaries, are to be interpreted in a consistent manner with their contextual meaning in the relevant art and are not to be construed in an idealized or overly formal sense unless expressly defined in the present invention.

The above description is merely an exemplary description of the technical spirit of the present invention, and those skilled in the art to which the present invention pertains will be able to modify and change the present invention in various ways without departing from the essential characteristics of the present invention.

Accordingly, the embodiments disclosed in the present invention are not intended to limit the technical spirit of the present invention, but intended to describe the same, and the scope of the technical spirit of the present invention is not limited by these embodiments. The scope of the present invention should be construed according to the appended claims, and all technical spirits within the equivalent range should be construed as being included in the scope of the present invention.

## Claims

1. A solar power generation blind device comprising:
a plurality of slat portions provided to produce electrical energy by generating electricity using light;
connecting portions that electrically connect the plurality of slat portions to each other at end portions of the plurality of slat portions; and
a controller that is electrically connected to the connecting portions and collects the electric energy produced by the plurality of slat portions.

2. The solar power generation blind device of claim 1, wherein the connecting portion transfers the electrical energy produced by the plurality of slat portions to the controller, and
each of the plurality of slat portions rotates based on the connecting portion installed at the end portion.

3. The solar power generation blind device of claim 2, wherein the connecting portion includes a finishing portion that finishes one end portion of the slat portion and is electrically connected to the slat portion, a shaft portion installed in the finishing portion and electrically connected to the finishing portion, a rotating portion that is rotatably installed on the shaft portion and rotates based on the shaft portion, and a wire portion installed in the rotating portion and electrically connected to the shaft portion, and
the slat portion rotates as the finishing portion rotates based on the shaft portion.

4. The solar power generation blind device of claim 2, wherein the connecting portion includes a finishing portion that finishes one end portion of the slat portion and is electrically connected to the slat portion, a shaft portion installed in the finishing portion and electrically connected to the finishing portion, a contact portion installed on the shaft portion and electrically connected to the shaft portion, and a rail portion into which the contact portion is inserted in a sliding manner and that is electrically connected to the contact portion,
the slat portion rotates as the finishing portion rotates based on the shaft portion.

5. The solar power generation blind device of claim 4, wherein a blocking portion that blocks light from entering from the outside is provided between a pair of different rail portions.

6. The solar power generation blind device of claim 1, wherein the slat portion includes a substrate portion and a plurality of solar modules that are installed to be electrically connected to the substrate portion and produces the electrical energy by generating electricity using light,
the solar modules include first solar modules respectively installed at one end portion and the other end portion of the substrate portion and a second solar module installed between the pair of first solar modules,
a protrusion electrically connected to an electrode of the substrate portion is formed at one end portion of the first solar modules, and
protrusions electrically connected to electrodes of the substrate portion are formed at both end portions of the second solar module.
